(19) Europäisches Patentamt
European Patent Office
Office européen des brevets

(11) **EP 2 658 906 B1**

(12) **EUROPEAN PATENT SPECIFICATION**

(45) Date of publication and mention
of the grant of the patent:
**03.07.2019 Bulletin 2019/27**

(21) Application number: **11852807.4**

(22) Date of filing: **23.12.2011**

(51) Int Cl.:
*C08J 9/06* (2006.01)       *C08L 101/16* (2006.01)
*B29D 7/01* (2006.01)       *B32B 5/02* (2006.01)
*B32B 5/18* (2006.01)       *B32B 27/06* (2006.01)
*B32B 27/10* (2006.01)      *B32B 27/12* (2006.01)
*B32B 27/36* (2006.01)

(86) International application number:
**PCT/KR2011/010032**

(87) International publication number:
**WO 2012/091366 (05.07.2012 Gazette 2012/27)**

(54) **ECO-FRIENDLY FOAMING SHEET**

UMWELTFREUNDLICHE SCHÄUMBARE FOLIE

FEUILLE MOUSSANTE ÉCOLOGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2010 KR 20100138391**

(43) Date of publication of application:
**06.11.2013 Bulletin 2013/45**

(73) Proprietor: **LG Hausys, Ltd.
Youngdungpo-gu,
Seoul 07326 (KR)**

(72) Inventors:
• **CHUNG, Gun Soo
Cheongju-si
Chungcheongbuk-do 361-727 (KR)**
• **NAM, Youn Woo
Cheongju-si
Chungcheongbuk-do 361-839 (KR)**
• **LEE, Si Young
Cheongju-si
Chungcheongbuk-do 360-787 (KR)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 1 837 363        EP-A1- 1 865 021
EP-A2- 2 708 357        EP-A2- 2 711 178
JP-A- 2003 253 028      KR-A- 20060 025 252
KR-A- 20100 048 193     US-A1- 2007 179 253**

• **DATABASE WPI Week 200474 Thomson
Scientific, London, GB; AN 2004-751388
XP002746122, -& JP 2004 293005 A (LONSEAL
CORP) 21 October 2004 (2004-10-21)**

## Description

### Technical Field

The present invention relates to an eco-friendly foaming sheet, more particularly, to an eco-friendly foaming sheet having flexibility fabricated by directly applying a biodegradable resin to a substrate sheet, foaming the sheet while forming a resin layer, and using a specific chemical foaming agent and/or eco-friendly plasticizer compatible with the biodegradable resin.

### Background Art

Conventionally, a resin foaming material ('foam') such as a polyolefin resin foam, a polyurethane resin foam, etc. exhibits excellent insulation, formability, shock-absorption, etc. as well as lightweight, thus having been widely used in industrial fields. However, although such resin foam is light in weight, a volume thereof is increased and causes difficulties in re-use thereof when upon being discarded. In particular, cross-linked foam formed by cross-linking the resin is substantially unable to be reused. Also, since the resin foam almost permanently remains even when it is buried in the ground (that is, high non-biodegradable), it is difficult to ensure a waste disposal space through incineration and/or landfill, in turn quite often polluting the environment and damaging the natural landscape.

Accordingly, biodegradable resins degraded by microorganisms in natural environments have been researched, developed, and manufactured into films and/or fibers as commercial products. In addition, extruded foams of such biodegradable resins have also been developed. For instance, non cross-linked foam using an aliphatic polyester resin has been known. However, it has been difficult to polymerize such aliphatic polyester resin through side reaction such as hydrolysis using water generated during poly-condensation. Therefore, a melt viscosity sufficient to maintain bubbles during extrusion foaming cannot be obtained, thus entailing problems in preparing foams having favorable foaming status and/or surface state.

In order to solve the above problems, for example, Korean Patent No. 2655796 proposed a method of cross-linking a resin via ionizing radiation. However, if a subject to be irradiated has a thickness of more than 1 mm, radiation does not reach the inside of the subject, which in turn causes formation of coarse and irregular bubbles in the subject during foaming. Moreover, since cross-linking requiring irradiation under a N2 atmosphere, in order to prevent deterioration of the resin has been required, it was very difficult to prepare foams having different thicknesses and satisfactory mechanical properties by a simple preparation method generally used in the art.

Meanwhile, according to Japanese Patent Publication No. SHO 46-38716, a continuous preparation method of polypropylene foam using a propylene/ethylene random copolymer was proposed. In addition, it was disclosed that using a cross-linking promoter is preferable to enable smooth and effective cross-linking reaction. Further, Japanese Laid-Open Patent Publication No. SHO 60-28852 proposed cross-linking and foaming of a mixture of a propylene/ethylene random copolymer and polyethylene by adding a cross-linking promoter. However, a polypropylene foam prepared according to the foregoing method cannot be reused after cross-linking. Of course, the foam is not biodegradable, in turn having difficulties in waste disposal. Moreover, other problems such as high calories for combustion, adverse effects on the environment, etc. may be entailed.

Meanwhile, a typical silk wallpaper is also called a polyvinyl chloride (PVC) wallpaper which is, at present, most preferably employed and prepared by applying PVC resin to paper, so as to impart a soft and silk-like surface feel thereto.

However, since any existing silk wallpaper is fabricated using PVC resin which is made from a raw material, petroleum, cost is continuously raised due to exhaustion of petroleum resources, a large amount of energy is consumed in the manufacture thereof, and greenhouse gases such as CO2 are discharged in large quantities. In addition, for landfill disposal, a long time of 500 years or more is required for biodegradation. On the other hand, incineration disposal may generate a number of harmful materials including hormone analogs and/or toxic gases, thus causing significant environmental contamination.

JP 2004-293005 A discloses a multilayered material comprising a layer of a foamed polylactic acid resin and a substrate layer of paper.

EP 1 865 021 A1 discloses a polylactic acid foam comprising a resin composition that comprises polylactic acid (A), polyolefin resin (B) and a polyolefin resin copolymer (C), wherei the weight ratio of the polylactic acid to the sum of the polyolefin resin and polyolefin resin copolymer in the resin composition is in the range of 0.2-6.

EP 2 708 357 A2 discloses sheets including a base layer, a foamed layer formed on the base layer, a printed layer formed on the foamed layer, and a partially foamed layer formed on the printed layer.

EP 1837 363 A1 discloses a single-layer matte film or sheet which comprises a filler and a biodegradable resin (A) comprising blend of a biodegradable polyester having a glass transition temperature of 10 °C or lower and a biodegradable polyester having a glass transition temperature of 30 °C or higher, and in which at least one side thereof has a surface gloss of 60% or lower.

EP 2 711 178 A2 discloses sheets including a base layer, a resin layer formed on the base layer, and a printed layer formed on the resin layer. The resin layer includes a polylactic acid resin. The sheets are biodegradable.

JP 2003-253028 A discloses a cross-linked polyester resin foam comprising a biodegradable polyester resin having a molding restriction ratio of from 0.5 to 2.0.

US 2007/179253 A1 discloses a biodegradable polyester resin composition which comprises a thermoplastic polymer comprising 100 parts by mass of an aliphatic polyester and 0.01 to 5 parts by mass of a (meth)acrylic ester and/or a glycidylether.

KR 10-2010-0048193 A discloses a wallpaper including a base sheet and a resin layer formed on the base sheet and including a biodegradable resin and a print layer provided on the formed resin layer.

KR 10-2006-0025252 A discloses biodegradable resin compositions.

## Disclosure of Invention

### Technical Problem

Accordingly, in order to solve the above problems, the present invention is directed to provision of an eco-friendly foaming sheet fabricated using a biodegradable resin composition on a substrate sheet, wherein the biodegradable resin composition is applied to the substrate sheet to form a resin layer, a print layer is provided on the formed resin layer, and the treated sheet is subjected to foaming, wherein the biodegradable resin composition includes a biodegradable resin, a chemical foaming agent and an eco-friendly plasticizer, wherein an average particle diameter of the chemical foaming agent is 3-30$\mu$m, wherein the resin layer is formed by T-die extrusion coating of the biodegradable resin composition on the substrate sheet, wherein the substrate sheet is a vellum paper or non-woven fabric having an average weight of 80 to 200 g/m$^2$ and a thickness of 0.1 to 0.5 mm.

### Solution to Problem

In order to accomplish the above object of the present invention, there is provided an eco-friendly foaming sheet fabricated using a biodegradable resin composition on a substrate sheet, wherein the biodegradable resin composition is applied to the substrate sheet, a printed layer is provided thereon, and the prepared sheet is subjected to foaming.

Hereinafter, the eco-friendly foaming sheet according to the present invention will be described in detail.

The eco-friendly foaming sheet according to the present invention may include a substrate sheet, and a biodegradable resin-containing resin layer which is provided on the substrate sheet and foamed to have unevenness thereon.

In this regard, the substrate sheet is a vellum paper or non-woven fabric (e.g., polyester/pulp composite non-woven paper). The substrate sheet for a wallpaper described above has an average weight of 80 to 200 g/m$^2$. If the average weight of the substrate sheet for wallpaper is less than the above range, the wallpaper may tear or other damage may occur during use or construction. On the contrary, when the average weight exceeds the above range, some problems in construction such as heavy weight, gap, curling, or the like may be encountered.

In fact, a thickness of the substrate sheet described above ranges from 0.1 mm to 0.5 mm.

With regard to the present invention, types (or kinds) of the biodegradable resin included in the print layer as well as the resin layer may include; polylactic acid, biodegradable poly-condensed aliphatic polyester, biodegradable poly-condensed copolymer aromatic polyester, lactone resins, biodegradable cellulose ester, polypeptide, polyvinylalcohol, starches, cellulose, chitin/chitosan, natural linear polyester resin, and so forth. More particularly, synthetic polymers including aliphatic polyesters obtained by poly-condensation of diols and dicarboxylic acid or derivatives thereof, for example; polylactic acid; polyethylene succinate obtained by poly-condensation of ethylene glycol and succinic acid or derivates thereof; polybutylene succinate obtained by poly-condensation of butanediol and succinic acid or derivatives thereof; polybutylene succinate/adipate obtained from butanediol and dicarboxylic acids, in particular, succinic acid and adipic acid or derivatives thereof; polybutylene succinate/carbonate obtained by poly-condensation of bntanediol and succinic acid and chain extension of the polycondensed material using a carbonate compound such as diethyl carbonate, maybe used.

Examples of lactone resins may include a variety of methylated lactone such as; $\epsilon$-caprolactone, $\beta$-propiolactone, $\gamma$-butyrolactone, $\delta$-valerolactone, enantolactone or 4-methyl caprolactone, 2,2,4-trimethyl caprolactone, 3,3,5-trimethyl caprolactone, etc. Biodegradable aromatic copolymer polyester may include, for example: a polyethylene terephthalate/succinate copolymer; a polyethylene terephthalate/adipate copolymer; a polyethylene terephthalate/sebacate copolymer; a polyethylene terephthalate/dodecadionate copolymer; a polybutylene terephthalate/succinate copolymer; a polybutylene terephthalate/adipate copolymer; a polybutylene terephthalate/sebacate copolymer; a polybutylene terephthalate/dodecadionate copolymer; a polyhexylene terephthalate/succinate copolymer; a polyhexylene terephthalate/adipate copolymer; a polyhexylene terephthalate/sebacate copolymer; a polyhexylene terephthalate/dodecadionate copolymer, or the like. Further, biodegradable cellulose ester such as cellulose acetate, cellulose butyrate, cellulose propionate, cellulose nitrate, cellulose sulfate, cellulose acetate butyrate, cellulose nitrate acetate, etc. may be used. Additionally, alternative examples of the synthetic polymer may include polypeptides such as polyglutamic acid, polyasparaginic acid, polyleucine, etc., or polyvinyl alcohols.

As natural polymers, for example, alpha starch such as corn starch, wheat starch, rice starch, etc.; and/or processed starch such as acetic esterified starch acetate, methyletherified starch, etc., may be used. Also, natural polymers, for example, natural linear polyester resins such as cellulose, carrageenan, chitin/chitosan, polyhydroxyl butyrate/valerate, or the like may be used.

Copolymers of components for the biodegradable resin described above may also be used. The biodegradable resin may be used alone or as a combination of two or more thereof. Such biodegradable resins may include, for example: polylactic acid; an aliphatic polyester obtained by poly-condensation of diol and dicarboxylic acid and derivates thereof; a biodegradable copolymer aromatic polyester obtained by poly-condensation of a dicarboxylic acid component, which includes an aromatic dicarboxylic acid and a derivative thereof as well as an aliphatic dicarboxylic acid and a derivative thereof, and a diol component including an aliphatic diol; lactone resins, or the like.

More preferably, the resin layer may include, as a first resin, the above poly(lactic acid)(PLA) and a second resin, that is, at least one selected from a group consisting of poly(butylene succinate)(PBS), a butylene succinate/adipate copolymer (PBSA) and a butylene adipate/terephthalate copolymer (PBAT), in a combined form thereof. Compared to use of poly(lactic acid)(PLA) or specific biodegradable resins, respectively, biodegradability and flexibility of a wallpaper may be easily controlled, thus realizing beneficial effects. In the present invention, if the resin layer comprises a composite resin, at least one selected from a group consisting of PBS, PBSA and PBAT, as a second resin, may be included in an amount of 10 to 500 parts by weight, preferably, 15 to 500 parts by weight and, more preferably, 20 to 500 parts by weight, in relation to 100 parts by weight of a first resin, i.e., poly(lactic acid) (PLA). If a content of the second resin is less than 10 parts by weight, the resin layer becomes too hard, in turn causing curling before or after wallpapering. On the other hand, if the content of the second resin exceeds 500 parts by weight, heat resistance of the resin layer may be deteriorated causing difficulties in processing the same.

Although a ratio of the biodegradable resin to overall resin components among a resin composition is not particularly limited, at least 50 %, preferably, 70 % or more is preferable. When an amount of the biodegradable resin is increased, degradation becomes rapid (that is, a degradation rate is high) and shape collapsibility after degradation is increased.

Further, a thermally degradable foaming agent to execute exothermic reaction may include, for example, azo-dicarbonamide, azo-dicarboxylamide, benzenesulfonyl hydrazide, dinitrosopentamethylene tetramine, toluenesulfonyl hydrazide, azo-bisisobutyronitrile, barium azo-dicarboxylate, bicarbonates such as sodium bicarbonate, or the like. These components may be singly or compatibly used, and included in a ratio of 1 to 50 parts by weight and, more preferably, 4 to 25 parts by weight, relative to 100 parts by weight of the resin composition. If an added amount of such a foaming agent is too small, foaming properties of the resin composition are reduced. On the contrary, if the amount is too large, strength and/or heat resistance of a foamed resin layer tend to decrease.

With decrease in a particle diameter of the foaming agent, a thermal degradation rate of the foaming agent rises, thus increasing bubble size. On the contrary, when the particle diameter of the foaming agent is increased, thermal degradation decreases, in turn reducing the bubble size. Therefore, in order to obtain bubbles having a uniform diameter, an average particle diameter ranges from 3 to 30 $\mu$m, more preferably, 5 to 28 $\mu$m.

In the case where a temperature difference between a degradation temperature of the foaming agent and a melting point of the biodegradable resin is large, it is preferable to use a degradation accelerator for the foaming agent. Such a degradation accelerator is not particularly limited but, however, may include commonly known compounds, for example; zinc oxide, magnesium oxide, calcium stearate, glycerin, urea, etc.

Further, as the eco-friendly plasticizer, citrates such as triethyl citrate, acetyl triethyl citrate, tributyl citrate, acetyl tributyl citrate, trioctyl citrate, acetyl trioxyl citrate, trihexyl citrate, acetyl trihexyl citrate, butyryl trihexyl citrate, trimethyl citrate, etc., or sugar alcohols may be used in an amount of 10 to 80 parts by weight, relative to 100 parts by weight of the resin composition, in order to attain suitable flexibility and to prevent bleeding of the plasticizer.

In this regard, the biodegradable resin-containing composition may further include an antioxidant, a lubricant, an inorganic filler, etc. as an additive. The antioxidant is purposed to protect against oxidation occurring during processing or in final products, and may be used in an amount of 0.5 to 5 parts by weight, relative to 100 parts by weight of the biodegradable resin-containing composition.

Also, the lubricant is used to improve workability and may be used in an amount of 0.2 to 3 parts by weight, relative to 100 parts by weight of the biodegradable resin-containing composition.

Alternatively, the inorganic filler is used to improve physical properties and may have an average size of 1.0 to 100 $\mu$m. In addition, the above filler may be at least one selected from talc, mica and calcium carbonate, and may be used in an amount of 30 to 300 parts by weight, relative to 100 parts by weight of the biodegradable resin-containing composition.

With regard to the eco-friendly foaming wallpaper, a method of forming a biodegradable resin layer may include; mixing a resin composition which includes a biodegradable resin, a thermally degradable foaming agent and a cross-linking promoter, using any mixing device such as a single-screw extruder, a twin-screw extruder, a Banbury mixer, a kneader mixer, a mixing roll, etc., at a degradation temperature of a thermally degradable foaming agent. In this case, a melt-mixing temperature is preferably at least 10°C lower than a degradation initiating temperature of the foaming agent. If the mixing temperature is too high, the thermally degradable foaming agent is degraded during mixing, thus not providing favorable foam. Preferable addition of the cross-linking promoter may include, for example: adding the promoter and mixing the same using a Henschel mixer, a Banbury mixer or a kneader mixer, prior to melt-mixing; introducing the promoter from a raw material inlet of an extruder; introducing the promoter from a vent inlet of an extruder having the vent, and so forth.

The biodegradable resin mixture obtained by mixing may be extruded on a T-die through a single-screw extruder or a twin-screw extruder, and discharged in a sheet form over a wallpaper substrate sheet, in turn being adhered thereto. During application, applying a predetermined amount of tension to the supplied substrate sheet for the wallpaper may maintain even and flat surface conditions, thereby enabling more effective application. In this regard, a method of applying tension to the substrate sheet is not particularly limited, and an apparatus such as an edge point control ('EPC') unit may be used.

Meanwhile, a thickness of the resin layer may range from 0.01 mm to 50 mm, more preferably, from 0.02 mm to 40 mm and, most preferably, from 0.05 mm to 30 mm. If the thickness of the resin layer is less than 0.01 mm, gas leakage from the surface of the resin layer in expansion molding is significant and causes difficulties in forming uniform foam. On the contrary, if the thickness exceeds 50 mm, the resin layer exhibits high rigidity and, occasionally, may adversely influence winding properties in continuous manufacture.

By extruding such a resin layer via T-die processing to manufacture a product as described, an alternative adhesive for adhering the resin layer to the resin applied to the surface of the substrate is not needed and uniform difference in thickness and planarity may be obtained, thus being preferable.

Next, a print layer may be provide on the resin layer and, using the chemical foaming agent described above, chemical foaming may be executed to form unevenness, so as to improve surface planarity and allow easy embossing, thus being preferable. In this case, an embossing patterned layer may be further provided above the print layer since the print layer has flexibility. As a result, an eco-friendly foaming sheet may be fabricated.

Here, a method of forming the embossing patterned layer is not particularly limited but may include, for example: rolling the print layer using a patterned roller; or, after adding a foaming agent to the print layer, foaming and gelling according to conventional methods.

The foregoing embossing method is not particularly limited but may be any conventional method including, for example, a rolling process using an embossing patterned roll.

In the case where a roll is used to form embossing patterns, the roll may be a press roller or a steel roller. Uniformly controlling pressure in right and left sides of the roller during rolling may be important to minimize deviation (or difference) in right and left thicknesses of a product, however, the present invention is not particularly restricted thereto.

Briefly, a method for fabrication of an eco-friendly foaming sheet having the structure described above may include: first, applying a resin composition containing a biodegradable resin to a substrate sheet as a subject to be used, to form a resin layer; then, providing a print layer thereon; and foaming the prepared sheet, thereby fabricating the eco-friendly foaming sheet.

As described above, the resin composition containing the biodegradable resin may comprise a biodegradable resin, a chemical foaming agent and an eco-friendly plasticizer.

Additionally, the resin layer is applied in a T-die mode and a method for forming a print layer is not particularly limited. For instance, the printing layer may be formed by any conventional printing method such as gravure printing, transfer printing, digital printing or rotary printing.

According to the present invention, foaming may be performed by chemical foaming and, more particularly, exothermic reaction occurs using a chemical foaming agent at a foaming temperature of 120 to 250°C, to form foam cells having a foaming ratio of 100 to 200% while generating nitrogen, carbon dioxide, etc., thereby attaining flexibility. Moreover, the foaming resin layer of the present invention may have an average bubble diameter of more than 50 $\mu$m.

Meanwhile, with regard to foaming, the foaming method may include use of CO2, foaming using UV irradiation, a foaming method wherein a foaming agent is added to a resin, followed by gelling the resin, or the like. In the present invention, considering workability of the print layer and heat resistance of a wallpaper, chemical foaming is preferably used.

**Advantageous Effects of Invention**

According to the present invention described above, without processes of preparing a sheet and foaming using a biodegradable resin, the biodegradable resin layer is directly applied to a substrate sheet as a subject to be used and foamed while forming a print layer, in addition, a chemical foaming agent and an eco-friendly plasticizer used together with the biodegradable resin are specifically defined to ensure desired flexibility, thereby fabricating an eco-friendly foaming sheet with high productivity.

**Best Mode for Carrying out the Invention**

Preferred embodiments of the present invention will be described in detail with reference to the following examples, however, the scope of which the present invention is not particularly limited to such examples. Further aspects of the invention are set out in the dependent claims.

**Mode for the Invention**

**EXAMPLE 1**

4 parts by weight of azo-dicarboxylamide as a foaming agent, 2 parts by weight of methacryl as a cross-linking promoter, 10 parts by weight of citrate, i.e., acetyltributyl citrate (ATBC) as an eco-friendly plasticizer, 100 parts by weight of an organic filler (Talc) and 2 parts by weight of a cross-linking promoter, relative to 100 parts by weight of polylactic acid (PLA) were mixed using a mixer to prepare a composition, and the composition was applied to a substrate sheet for a wallpaper having an average weight of 100 g/m$^2$ by T-die extrusion to form a resin layer, thus preparing an eco-friendly foaming sheet.

Next, a print layer was formed on the eco-friendly foaming sheet using PLA resin through gravure printing, followed by foaming in an oven and forming an embossed layer using an embossing roll, thereby fabricating a biodegradable wallpaper having workability and heat resistance.

**COMPARATIVE EXAMPLE 1**

Using a composition including; 100 parts by weight of a composite resin containing poly(lactic acid) (PLA) and poybutylene adipate/terephthalate copolymer (PBAT) (ratio by weight; PLA:PBAT = 9:1), 10 parts by weight of nano-mineral, and other additives such as a stabilizer, a resin layer was prepared by T-die extrusion. Then, the prepared resin layer was combined with a substrate sheet for a wallpaper having an average weight of 100 g/m<2>, using an adhesive, thus forming an eco-friendly foaming sheet.

Next, a print layer was formed on the eco-friendly foaming sheet using PLA resin through gravure printing, followed by forming an embossed layer using an embossing roll while pre-heating, thereby fabricating a biodegradable wallpaper having workability and heat resistance.

**COMPARATIVE EXAMPLE 2**

The same experiment as described in Example 1 was repeated except that a resin layer was not foamed.

**EXAMPLE 2**

The same experiment as described in Example 1 was repeated to prepare an eco-friendly foaming sheet and fabricate a biodegradable wallpaper except that a composite resin comprising poly(lactic acid) (PLA) and polybutylene adipate/terephthalate copolymer (PBAT) in a relative ratio by weight of 7:3(PLA:PBAT) was used.

**Items for measurement of physical properties**

* Stiffness (assessment of flexibility): after preparing a specimen having a size of 100×600 mm, the specimen was bent to allow both ends thereof to contact each other. Here, splitting or bending extent of the specimen was measured.

Excellent ◎ - smoothly bent without splitting

Moderate ○ - forcibly bent without splitting

Poor × - splitting of the resin layer at a bent site

* Lamination: when a sheet and a paper are detached (or delaminated) from each other, interlayer adhesion was measured based on attachment extent of the paper to the sheet.

Excellent ◎ - delamination between a paper and another paper.

Moderate ◎ - partial delamination between a sheet and a paper.

Poor × - delamination between a sheet and a paper.

* Embossing property: depth of roll emboss and restoration thereof were measured.

Embossing ◎ - possible emboss depth of up to 0.8 mm without restoration.

Embossing ○ - possible emboss depth of up to 0.5 mm with partial restoration.

Embossing × - almost restored after embossing.

* Heat resistance: after clearly cutting a foamed resin layer to an angle of 15 cm, the cut piece was left in an oven at 8o°C for 60 minutes. After 60 minutes, the test piece was removed from the oven and cooled to room temperature for about 30 to 60 minutes. Dimensions of the obtained sample were measured and a variation in dimensions was calculated as a percentage by an equation below. Afterwards, results thereof were assessed according to the following determination standards.

Heat resistance ◎ - variation in dimensions within 3%.

Heat resistance ○ - variation in dimensions within 5%.

Heat resistance × - variation in dimensions exceeding 5%.

$$\text{Variation in heating dimension(\%)} = [\text{a length of a sample before placing it in an oven a length of the sample after taking the same out of the oven/the length of the sample before placing it in the oven}] \times 100$$

* Foaming ratio: By observing a cross-section of a product using a microscope, thicknesses before and after foaming were measured, respectively.

Foaming ratio ◎ - the thickness after foaming is $_{200}$% or more, compared to the thickness before foaming.

Foaming ratio ○ - the thickness after foaming ranges from 100 to 200%, compared to the thickness before foaming.

Foaming ratio × - the thickness is not varied after foaming.

$$\text{Variation in heating dimension(\%)} = [\text{a length of a sample before placing it in an oven a length of the sample after taking the same out of the oven/the length of the sample before placing it in the oven}] \times 100$$

* Average bubble diameter: By observing a cross-section of a product using a microscope, bubble diameter was measured.

Average bubble diameter ◎ - 50 $\mu$m or more

Average bubble diameter ○ - 30 to 50 $\mu$m

Average bubble diameter × - less than 30 $\mu$m

Table 1

[Table 1]

| Items | Example 1 | Example 2 | Comparative Example 1 | Comparative Example 2 |
|---|---|---|---|---|
| Stiffness | ◎ | ○ | x | ◎ |
| Lamination | ◎ | ○ | x | ◎ |
| Embossing properties | ◎ | ○ | ○ | ○ |
| Heat resistance | ○ | ○ | x | ○ |
| Foaming ratio | ○ | ○ | ○ | X |
| Average bubble diameter | ◎ | ○ | ○ | x |

As shown in TABLE 1, it can be seen that the inventive examples 1 and 2 exhibit flexibility ensured while foaming. However, comparative examples 1 and 2 demonstrate deteriorated flexibility and surface fracture in the embossing process.

## Claims

1. An eco-friendly foaming sheet fabricated using a biodegradable resin composition on a substrate sheet, wherein the biodegradable resin composition is applied to the substrate sheet to form a resin layer, a print layer is provided on the formed resin layer, and the treated sheet is subjected to foaming,
wherein the biodegradable resin composition includes a biodegradable resin, a chemical foaming agent and an eco-friendly plasticizer, wherein an average particle diameter of the chemical foaming agent is 3-30 $\mu$m,
wherein the resin layer is formed by T-die extrusion coating of the biodegradable resin composition on the substrate sheet,
wherein the substrate sheet is a vellum paper or non-woven fabric having an average weight of 80 to 200 g/m$^2$ and a thickness of 0.1 to 0.5 mm.

2. The foaming sheet according to claim 1, wherein the resin layer is formed to satisfy a thickness ranging from 0.01 to 50 mm.

3. The foaming sheet according to claim 1, wherein the biodegradable resin is at least one selected from a group consisting of; polylactic acid, polycondensed aliphatic biodegradable polyester, polycondensed copolymer aromatic biodegradable polyester, lactone resins, biodegradable cellulose ester, polypeptides, polyvinylalcohol, starches, cellulose, chitin/chitosan and natural linear polyester resins.

4. The foaming sheet according to claim 3, wherein the biodegradable resin is a composite resin containing polylactic acid as a first resin, as well as at least one resin selected from a group consisting of poly(butylene succinate), polybutylene succinate/adipate copolymers, polybutylene adipate/terephthalate copolymers and ethylvinyl acetate, as a second resin.

5. The foaming sheet according to claim 4, wherein the composite resin includes at least one second resin selected from a group consisting of polybutylene succinate, polybutylene succinate/adipate copolymers, polybutylene adipate/terephthalate copolymers and ethylvinyl acetate in an amount of 120 to 500 parts by weight, relative to 100 parts by weight of the first resin.

6. The foaming sheet according to claim 1, wherein a biodegradable component including the biodegradable resin is 70% or more, relative to a total weight of the biodegradable resin composition.

7. The foaming sheet according to claim 1, wherein the chemical foaming agent is at least one selected from azo-dicarboxylamide, benzenesulfonyl hydrazide, dinitroso pentamethylene tetramine, toluenesulfonyl hydrazide, azo-bis isobutyronitrile, barium azo-dicarboxylate and sodium bicarbonate, and is used in an amount of 1 to 10 parts by weight, relative to 100 parts by weight of the biodegradable resin composition.

8. The foaming sheet according to claim 1, wherein the eco-friendly plasticizer is a citrate or sugar alcohol-based plasticizer and is used in an amount of 10 to 80 parts by weight, relative to 100 parts by weight of the biodegradable resin composition.

9. The foaming sheet according to claim 1, wherein the foaming is executed in a chemical foaming mode at a temperature ranging from 120 to 250°C.

10. The foaming sheet according to claim 1, further comprising an embossed layer over the print layer.

11. The foaming sheet according to claim 1, wherein the print layer is prepared using the biodegradable resin by gravure printing, transfer printing, digital printing or rotary printing, and formed along unevenness of the resin layer in the foaming sheet.

**Patentansprüche**

1. Umweltfreundlicher schäumbarer Bogen, hergestellt unter Verwendung einer bioabbaubaren Harzzusammensetzung auf einem Substratbogen, wobei die bioabbaubare Harzzusammensetzung auf den Substratbogen aufgetragen wird, um eine Harzschicht zu bilden, eine Druckschicht auf der gebildeten Harzschicht bereitgestellt wird und der behandelte Bogen einem Schäumen unterzogen wird,
wobei die bioabbaubare Harzzusammensetzung ein bioabbaubares Harz, ein chemisches Schäumungsmittel und einen umweltfreundlichen Weichmacher einschließt, wobei ein durchschnittlicher Teilchendurchmesser des chemischen Schäumungsmittels 3-30 $\mu$m ist,
wobei die Harzschicht durch T-Düsenextrusionsbeschichtung der bioabbaubaren Harzbeschichtung auf dem Substratbogen gebildet wird,
wobei der Substratbogen ein Pergamentpapier oder ein Vliesstoff mit einem durchschnittlichen Gewicht von 80 bis 200 g/m$^2$ und einer Dicke von 0,1 bis 0,5 mm ist.

2. Schaumbogen nach Anspruch 1, wobei die Harzschicht gebildet wird, um eine Dicke in einem Bereich von 0,01 bis 50 mm zu erfüllen.

3. Schaumbogen nach Anspruch 1, wobei das bioabbaubare Harz wenigstens eines ist, ausgewählt aus einer Gruppe bestehend aus: Polymilchsäure, polykondensiertem aliphatischem bioabbaubarem Polyester, polykondensiertem aromatischem bioabbaubarem Copolymerpolyester, Lactonharzen, bioabbaubarem Cellulosester, Polypeptiden, Polyvinylalkohol, Stärken, Cellulose, Chitin/Chitosan und natürlichen linearen Polyesterharzen.

4. Schaumbogen nach Anspruch 3, wobei das bioabbaubare Harz ein Verbundharz ist, enthaltend Polymilchsäure als ein erstes Harz, sowie wenigstens ein Harz ausgewählt aus einer Gruppe bestehend aus Poly(butylensuccinat), Polybutylensuccinat/adipat-Copolymeren, Polybutylenadipat/terephthalat-Copolymeren und Ethylvinylacetat als ein zweites Harz.

5. Schaumbogen nach Anspruch 4, wobei das Verbundharz wenigstens ein zweites Harz einschließt, ausgewählt aus einer Gruppe bestehend aus Polybutylensuccinat, Polybutylensuccinat/adipat-Copolymeren, Polybutylenadipat/terephthalat-Copolymeren und Ethylvinylacetat in einer Menge von 120 bis 500 Gewichtsteilen, relativ zu 100 Gewichtsteilen des ersten Harzes.

6. Schaumbogen nach Anspruch 1, wobei eine bioabbaubare Komponente einschließend das bioabbaubare Harz 70% oder mehr ist, relativ zu einem Gesamtgewicht der bioabbaubaren Harzzusammensetzung.

7. Schaumbogen nach Anspruch 1, wobei das chemische Schäumungsmittel wenigstens eines ist, ausgewählt aus Azodicarboxylamid, Benzolsulfonylhydrazid, Dinitrosopentamethylentetramin, Toluolsulfonylhydrazid, Azo-bis-isobutyronitril, Bariumazodicarboxylat und Natriumbicarbonat und in einer Menge von 1 bis 10 Gewichtsteilen, relativ zu 100 Gewichtsteilen der bioabbaubaren Harzzusammensetzung, verwendet wird.

8. Schaumbogen nach Anspruch 1, wobei der unweltfreundliche Weichmacher ein Citrat- oder Zuckeralkohol-basierter Weichmacher ist und in einer Menge von 10 bis 80 Gewichtsteilen, relativ zu 100 Gewichtsteilen der bioabbaubaren Harzzusammensetzung, verwendet wird.

9. Schaumbogen nach Anspruch 1, wobei das Schäumen in einem chemischen Schäumungsmodus in einem Temperaturbereich von 120 bis 250°C durchgeführt wird.

10. Schaumbogen nach Anspruch 1, weiter umfassend eine geprägte Schicht über der Druckschicht.

11. Schaumbogen nach Anspruch 1, wobei die Druckschicht unter Verwendung des bioabbaubaren Harzes durch Tiefdruck, Transferdruck, Digitaldruck oder Rotationsdruck hergestellt wird und entlang Unebenheit der Harzschicht in dem Schaumbogen gebildet wird.

## Revendications

1. Feuille moussante écologique fabriquée en utilisant une composition de résine biodégradable sur une feuille de substrat, ladite composition de résine biodégradable étant appliquée à la feuille de substrat de manière à former une couche de résine, une couche d'impression étant pourvue sur la couche de résine formée, et la feuille traitée étant soumise à la formation d'une mousse,
dans laquelle la composition de résine biodégradable renferme une résine biodégradable, un agent moussant chimique et un plastifiant écologique, un diamètre de particule moyen de l'agent moussant chimique étant de 3 à 30 $\mu m$,
dans laquelle la couche de résine est formée par revêtement par extrusion T-die de la composition de résine biodégradable sur la feuille de substrat,
dans laquelle la feuille de substrat est un papier vélin ou une étoffe non tissée ayant un poids moyen de 80 à 200 g/m$^2$ et une épaisseur de 0,1 à 0,5 mm.

2. Feuille moussante selon la revendication 1, dans laquelle la couche de résine est formée pour atteindre une épaisseur allant de 0,01 à 50 mm.

3. Feuille moussante selon la revendication 1, dans laquelle la résine biodégradable est au moins une résine sélectionnée dans un groupe constitué : d'acide polylactique, de polyester biodégradable aliphatique polycondensé, de polyester biodégradable aromatique d'un copolymère polycondensé, de résines de lactone, d'ester biodégradable de cellulose, de polypeptides, de polyvinylalcools, d'amidons, de cellulose, de chitine/chitosane et de résines de polyester linéaire.

4. Feuille moussante selon la revendication 3, dans laquelle la résine biodégradable est une résine composite contenant de l'acide polyactique en tant que première résine, ainsi qu'au moins une résine sélectionnée dans un groupe constitué de succinate de polybutylène, de copolymères de succinate/adipate de polybutylène, de copolymère d'adipate/téréphtalate de polybutylène et d'acétate d'éthylvinyle en tant que deuxième résine.

5. Feuille moussante selon la revendication 4, dans laquelle la résine composite renferme au moins une deuxième résine sélectionnée dans un groupe constitué de succinate de polybutylène, de copolymères de succinate/adipate de polybutylène, de copolymères d'adipate/téréphtalate de polybutylène et d'acétate d'éthylvinyle en une quantité de 120 à 500 parties en poids, par rapport à 100 parties en poids de la première résine.

6. Feuille moussante selon la revendication 1, dans laquelle la teneur en un composant biodégradable contenant la résine biodégradable est de 70 % ou supérieure par rapport à un poids total de la composition de résine biodégradable.

7. Feuille moussante selon la revendication 1, dans laquelle l'agent moussant est au moins un composé sélectionné parmi l'azo-dicarboxylamide, l'hydrazyde de benzènesulfonyle, le dinitroso penthaméthylène tétramine, l'hydrazyde de toluènesulfonyle, l'isobutyronitrile bis-azoïque, le dicarboxylate de baryum azoïque et le bicarbonate de soude, et est utilisé en une quantité de 1 à 10 parties en poids, par rapport à 100 parties en poids de la composition de résine biodégradable.

8. Feuille moussante selon la revendication 1, dans laquelle le plastifiant écologique est un plastifiant à base de citrate ou d'alcool de sucre et il est utilisé en une quantité de 10 à 80 parties en poids, par rapport à 100 parties en poids de la composition de résine biodégradable.

9. Feuille moussante selon la revendication 1, dans laquelle le moussage est réalisé en un mode de moussage chimique à une plage de température allant de 120 à 250 °C.

10. Feuille moussante selon la revendication 1, comprenant en outre une couche gaufrée par-dessus la couche imprimée.

11. Feuille moussante selon la revendication 1, dans laquelle la couche d'impression est préparée en utilisant la résine biodégradable par impression héliographique, impression par transfert, impression numérique ou impression rotative et est formée sur la longueur de l'irrégularité de la couche de résine dans la feuille moussante.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2655796
- JP SHO4638716 B
- JP SHO6028852 B
- JP 2004293005 A
- EP 1865021 A1
- EP 2708357 A2

- EP 1837363 A1
- EP 2711178 A2
- JP 2003253028 A
- US 2007179253 A1
- KR 1020100048193 A
- KR 1020060025252 A